# EUROPEAN PATENT APPLICATION

(11) **EP 1 046 332 A1**
(43) Date of publication of application: **25.10.2000**
(21) Application number: 99500061.9
(22) Date of filing: 19.04.1999
(51) Int. Cl.: A01D 34/13

(54) **Cutting device for agricultural machines**

(71) Applicant: Suarez, Alfonso Alberto, Cordoba, Provincia de Cordoba (AR); Gomariz, Antonio, Rio Tercero, Provincia de Cordoba (AR)
(72) Inventor: Suarez, Alfonso Alberto, Cordoba, Provincia de Cordoba (AR); Gomariz, Antonio, Rio Tercero, Provincia de Cordoba (AR)
(74) Representative: Cobas Horcajo, Susana

(57) **Abstract**

The present invention is referred to a cutting device (30) for agricultural machines comprising an upper cutting blade (32), a lower cutting blade (33), between said upper and lower cutting blades a separating plate (37) is arranged, a counterblade (31) fixed to the chassis (43) of said agricultural machine, a driving mechanism (23) for driving said upper and lower cutting blades (32-33) with an alternative linear movement, comprising each upper and cutting blades a set of individual blades separated between each other, said counterblade comprises a "U" shaped fixed counterblade wherein each arm of said U-shaped counterblade defines an individual counterblade comprising an upper portion and a lower portion, wherein the upper portion is arranged above said upper cutting blade and said lower portion is arranged below said lower cutting blade therefore the shearing effect is created between each upper and lower cutting blades and said fixed counterblade.

## Description

### Field of the invention:

The present invention is related to improvements in agricultural machines, and more particularly is referred to a cutting device for agricultural machines, especially for harvester machines. Even more particularly, the present invention is referred to a cutting device capable to be installed in a harvester headstock including two cutting blades and a fixed counterblade.

### Background of the invention

In the prior art, there are several cutting devices for harvester machines. Basically said cutting device consists of two cutting blades overlapping each other, each of which comprises several knife sections secured to a long knife bar. Once the upper knife bar (and consequently the upper knife sections) moves to the right, the lower bar moves to the left, and due to the overlapping relationship between the knife sections a shearing effect is thus created. Since this cutting device is installed on the front part of a harvester machine, said shearing effect cuts cereal and forage plants to be harvested. Even when this harvester machines were the object of several improvements related to cutting device drive mechanisms, blade design, etc., an improved cutting device for reducing crop loss during the harvest process is still a market need.

There are several patent registrations from which different cutting blades arrangements, driving mechanisms, blade designs, etc., could be learn. For instance U.S. patent registrations N° 1,017,863 of Fulton; U.S. patent N° 1,182,899 of Enders; U.S. patent N° 1,424,617 of Cambell et al.; U.S. patent N° 1,635,050 of McKellar; U.S. patent N° 1,644,962 of Swickard, U.S. patent N° 2,528,659 of Krause and U.S. patent N°4,909,025 of Reissig et al. are examples thereof. These patent registrations are cited only as a reference. Even when the inventions described in these documents involve improvements on cutting devices, a significant decreasing in crop loss is not achieved with any of them. This loss is created due to the defective plant stems cutting. That is, not all plant stems are well cut when the harvester machine harvests said crop. Therefore the crop is not properly harvests and a significant loss is then created. Ernest O. Hutsell describes in U.S. Patent N° 1,647,867 a lawn mower comprising a cutting device which includes the combination of a frame, two knife bars reciprocally mounted transversely of a frame, two rods mounted above and parallel to the respective knife bars, guides in which the rods are reciprocal, and means for reciprocate moving said knife bars. Even when the mechanisms involved are useful for a lawn mower, the hard work usually involved in crops harvesting become said mechanism not useful for this task.

One object of the present invention resides on a new an improved cutting device for harvester machines comprising a combination of two moving cutting blades set overlapping each other, an a fixed counterblade. The above cited shearing effect is created between each set of moving cutting blades and the fixed counterblade. This arrangement allows an improved shearing effect by which a crop loss is thus avoided. Another object of the present invention resides on an improved harvester machine including a cutting device through which all plant stems are cut and thus a crop loss is avoided.

### Summary of the invention:

The present invention comprises a cutting device forming part of the harvester machine headstock transversely mounted of said headstock, including two moving cutting blades, a fixed counterblade and an apparatus for driving with an alternative lineal movement said moving cutting blades. This cutting device comprises an upper cutting blade comprising a first set of individual trapeze-shaped blades fixed with a rectilinear arrangement to a first supporting steel bar, a second lower cutting blade comprising a second set of individual trapeze-shaped blades fixed with a rectilinear arrangement to a second supporting steel bar, between each individual trapeze-shaped blade of each first and second set of individual blades there is a gap, said steel bar of rectangular cross section includes in one end a bolt at 90° in relation with said bar, said bolt connect said bar with a driving arm of said driving apparatus, said lower blade is identical and symmetrical to said upper blade, said fixed counterblade comprises a set of individual U-shaped fixed blades with a rectilinear arrangement comprising two parallel forward counteredges and a transverse rearward bar, said set of counterblades are fixed to a supporting bar parallel and behind to said blades and each counterblades defines a guide and support means for said blades.

### Brief description of drawings:

Figure 1 is a top plan schematic illustration of a cutting device according to the prior art mentioned in the introduction hereto.

Figure 2 is a top plan view of a cutting device according to a preferred embodiment of the present invention.

Figure 3 schematically shows a cross section view of cutting device of Figure 2.

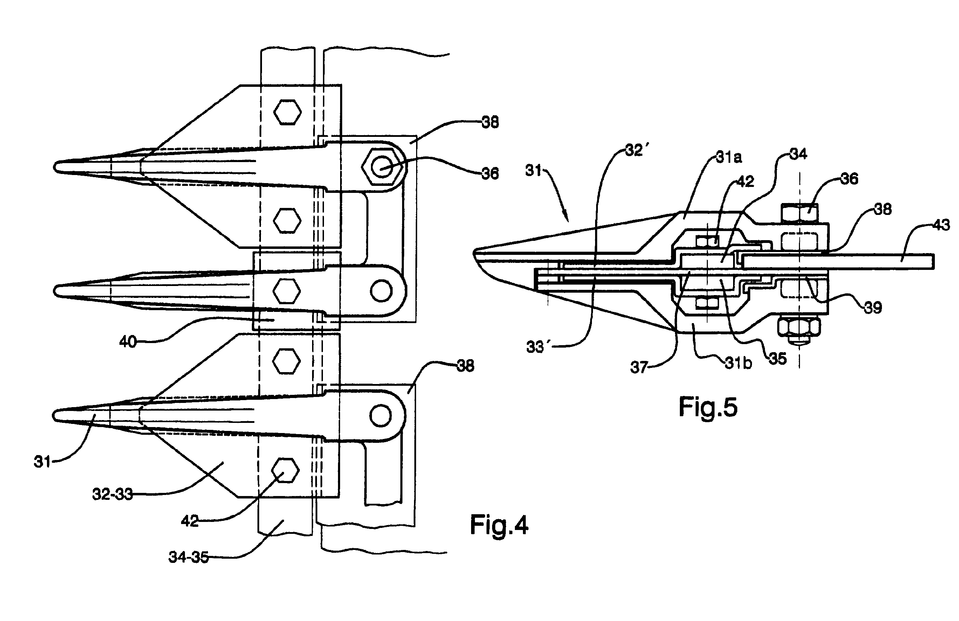

Figure 4 is a top plan view of a portion of the present cutting device wherein the position of each element of upper cutting blade coincide with the position of each element of Lower cutting blade.

Figure 5 is an elevational side view of one element of the present cutting device, wherein upper and lower blades and fixed counterblade are clearly shown.

Figures 6-9 are schematic top plan views of the present cutting device illustrating the operation thereof.

### Description of the invention

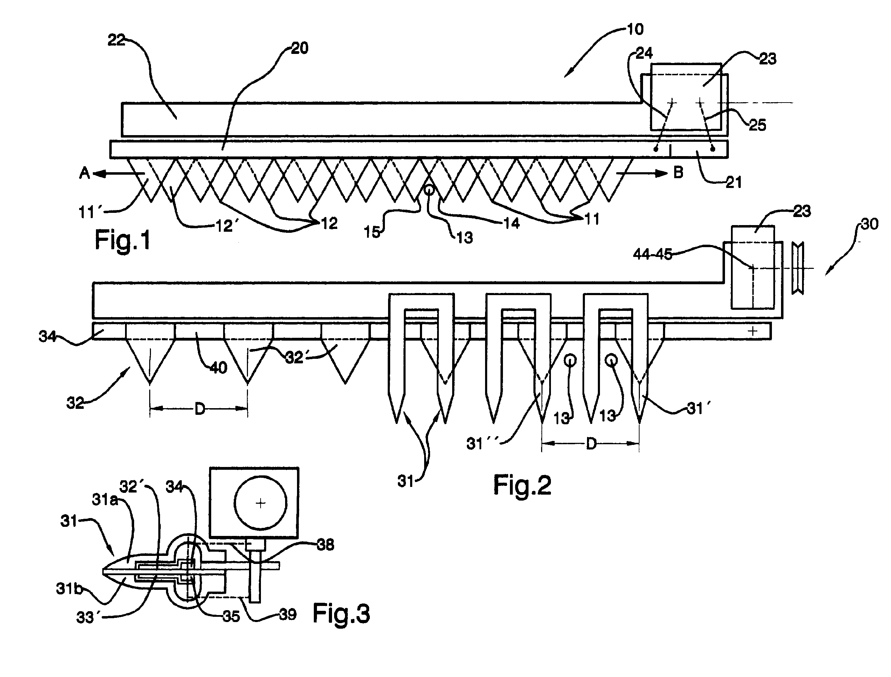

Figure 1 illustrates a prior-art cutting device 10 comprising an upper cutting blade 11 with a supporting steel bar 20 to which a set of cutting blades 11 are fixed thereto, a lower cutting blade 12 with a supporting steel bar 21 to which a set of lower cutting blades 12 are fixed thereto. Said blades are further supported by a supporting chassis 22 and driven by a driving apparatus 23 comprising a first driving shaft 24 for driving said upper cutting blade 11 and a second driving shaft 25 for driving said lower cutting blade 12. Said upper cutting blade 11 moving to the left as indicated by arrow A and a lower cutting blade 12 moving to the right as indicated with arrow B are in an off-set position ready for cutting a plant stem 13 by a shearing effect created between cutting edge 14 of one element of upper cutting blade 11 and cutting edge 15 of one element of lower cutting blade 12. There are no fixed elements with which said blades can interact, the present invention provides a fixed counterblade to which the plant stem is to be rested to be cut.

Figures 2 and 3 schematically illustrate a cutting device 30 of the present invention comprising a fixed counterblade 31. In said figure 2 the upper blade 32 coincide with the lower one 33. This counterblade is one of the novel aspects of the present invention, together with blades arrangement as it will be explained in detail below.

Said cutting device 30 also comprises an upper cutting blade 32 comprising a set of individual cutting blades 32' and a lower cutting blade 33 also comprising a set of individual cutting blades 33'. Unlike the prior art cutting blades the present invention purposes that a gap "D" is defined between said individual blades 32'-33' in the upper and lower cutting blades 32-33, as indicated in figure 2. Therefore said individual blades are not arranged one beside the other, and said distance D is also equal to the distance between first counterblade 31'and the third one 31".

Said upper blade 32 comprises an upper supporting bar 34 to which said individual upper blades 32' are fixed, and said lower blade 33 also comprises a lower supporting bar 35 to which said individual blades 33' are fixed. Each counterblade 31 comprises an upper piece 31a and a lower piece 31b, joined each other and to a chassis 43 by a fasten bolt 36. Inside each counterblade 31, between and separating said blades 32-33 there is arranged a separating plate 37. Upper blade 32' includes a wearing plate 38 and lower blade 33 also includes a corresponding wearing plate 39. Separating pieces 40-41 are arranged between blades 32-33 and a fasten bolts 42 join blades 32-33 and separating pieces 40-41.

Said driving apparatus 23 basically comprises an engine (not illustrated) for driving a pulley 23' which in turn drives two concentric shafts 44-45 turning at opposite directions, and two driving shafts or arms 24-25. This driving apparatus 23 for moving said cutting blades 32-33 with an opposite alternating linear movement is not described in detail since it is a well-known means in the art.

Figures 1, 6, 7, 8 and 9 are useful for understanding the way used by the present cutting device for cutting plant stems to be harvested and the differences between this device and the prior-art cutting devices already cited above. Unless stated on the contrary, and in order to understand the embodiment illustrated in the accompanying drawings, a one-sense movement of each blade will only be considered, that is half turn of driving apparatus's pulley 23', even when it is well known that each blade (upper 32 and lower 33) is moved according to an alternative linear movement (from left to right and vice versa). In the cutting devices of the prior art said shearing effect is created between two blades therefore a plant stem 13 (figure 1) is cut due to said shearing effect created between an upper blade 11 and a lower blade 12, particularly between a first cutting knife 14 of said upper cutting blade 11 and a second cutting knife 15 of said lower cutting blade 12. Therefore there is only one shearing effect for each pulley turn of said driving mechanism 23.

One of the advantages of the present invention resides on the fact that the inventor has surprisingly discovered that for each revolution of said pulley four different shearing effects can be created due to the combination of two moving blades and a fixed counterblade.

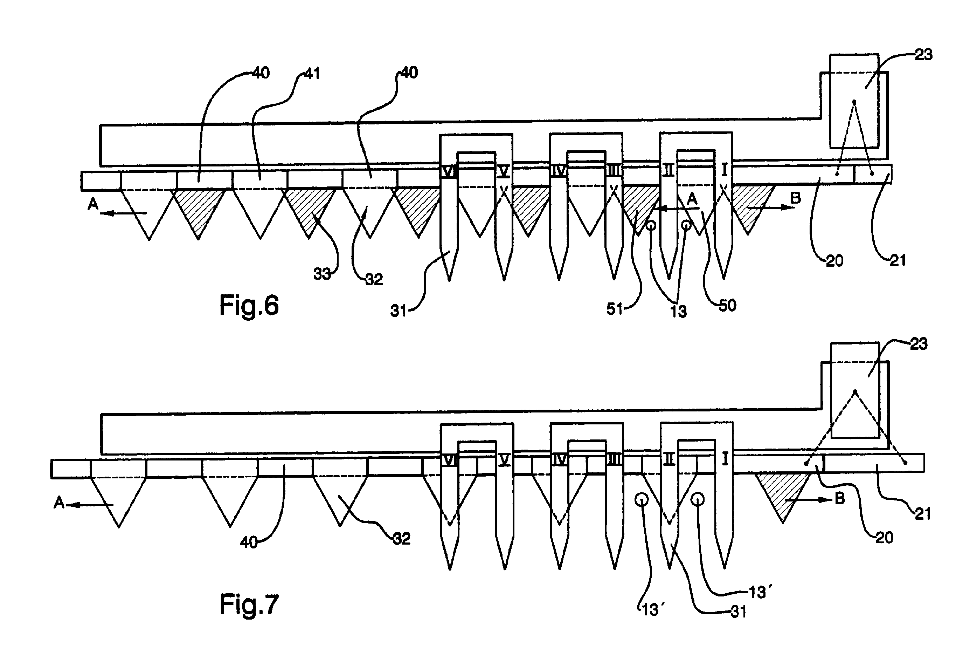

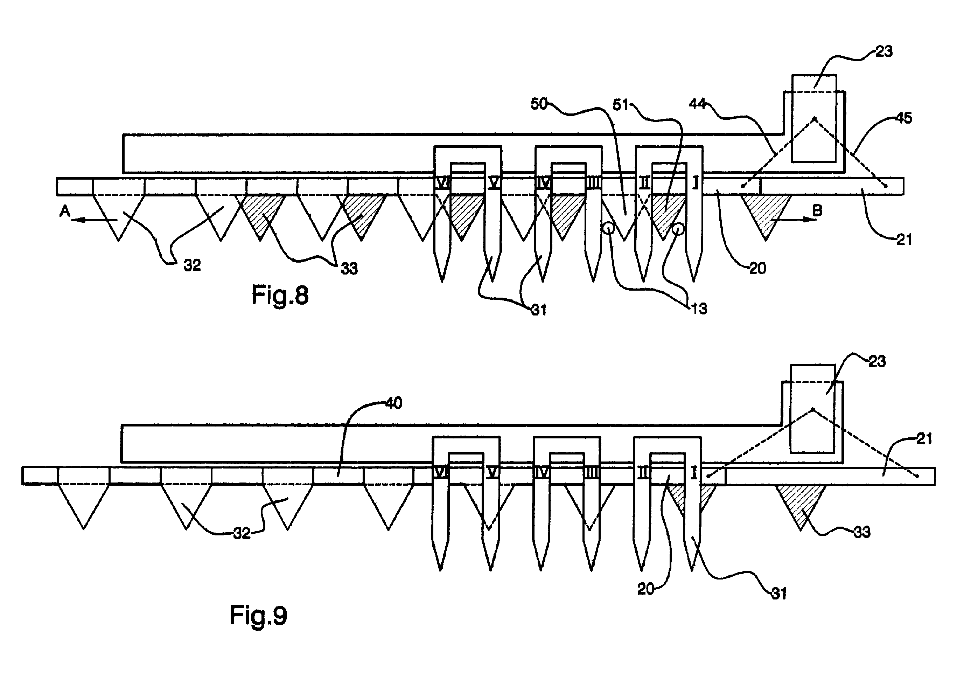

Turning now to Figures 6-9 it is shown how the stems are cut with half revolution of said pulley 23' of said driving mechanism 23. For illustration purposes only the different parts of each fixed counterblades 31 are indicated with I, II, III, VI, V and VI in figures 6-9. With only half revolution of said pulley a first cutting knife 50 of said upper blade 32 (figure 6) is moved from counterblade I to counterblade III and simultaneously a second cutting knife 51 of said lower blade 33 is moved from counterblade III to counterblade I, therefore plant stems 13 entering in the space comprised between counterblades I and II and between counterblades II and III are cut due to the shearing effect created between cutting knifes 50 and 51 and said counterblade II. Figure 7 shows the moment in which the
position of upper blades 32 and lower blades 33 coincides with the position of counterblade II, in this moment new stems 13' enter in the space between said blades which are cut due to the shearing effect created between said cutting knifes 50-51 and said counterblades III and I respectively as illustrated in figure 8. Figure 9 illustrates the end of this linear movement of said upper and lower blades 32-33, that is upper cutting knife 50 was moved from counterblade I to counterblade III and lower cutting knife 51 was moved from counterblade III to counterblade I, thus four different shearing effects were created with only half revolution of said pulley 23' of said driving mechanism 23 increasing the efficiency of this cutting task.

It is clearly understood that the novelty of the present invention resides on the combination of the following elements:
- combining two moving upper and lower cutting blades with a fixed counterblade,
- defining a gap between each individual cutting blade and the next one of each upper and lower cutting blades, that is said individual cutting blades are not arranged one next to the other, there is a gap between each other, equal to the distance between three counterblades,
- with only one half turn of said driving mechanism's pulley each blade runs a space comprised between three counterblades
- with only one half turn of said driving mechanism's pulley four different shearing effects are created.

## Claims

1. Cutting device (30) for agricultural machines wherein said cutting device comprises an upper cutting blade (32), a lower cutting blade (33), between said upper and lower cutting blades a separating plate (37) is arranged, a counterblade (31) transversely fixed to the chassis (43) of said agricultural machine, a driving mechanism (23) for driving said upper and lower cutting blades (32-33) with an alternative linear movement, comprising each upper and cutting blades a set of individual cutting knifes (14-15) separated between each other, said counterblade (31) comprises a "U" shaped fixed counterblade wherein each arm of said U-shaped counterblade (31) defines an individual counterblade comprising an upper portion and a lower portion (31a-31b), wherein the upper portion (31a) is arranged above said upper cutting blade (32) and said lower portion (31b) is arranged below said lower cutting blade (33) therefore the shearing effect is created between each upper and lower cutting blades (32-33) and said fixed counterblade (31).

2. Cutting device for agricultural machines in accordance to claim 1, wherein said individual cutting knifes (14-15) of said upper and lower cutting blades (32-33) are separated a distance equal to the distance ("D") between three individual fixed counterblades (31'-31").

3. Cutting device for agricultural machines in accordance to claim 1, wherein said driving mechanism (23) comprises an engine connected to a pulley (23'), driving said pulley a pair of driving arms (24-25) one of which is connected to a first supporting bar (34) wherein said set of individual upper cutting knifes are fixed, and the other driving arm is connected to a second supporting bar (35) wherein said set of individual lower cutting knifes are fixed.

4. Cutting device for agricultural machines in accordance to claim 3, wherein with only one half turn of said pulley (23') each upper and lower cutting blade (32-33) runs a space equal to the space comprised between three fixed individual counterblades (31'-31").

5. Cutting device for agricultural machines in accordance to claim 3, wherein with only one half turn of said pulley (23') four different shearing effects are created.

6. A method for cutting a plant stem comprising the steps of providing an agricultural machine with a cutting device comprising an upper cutting blade (32), a lower cutting blade (33), between said upper and lower cutting blades a separating plate (37) is arranged, a counterblade (31) fixed to the chassis (43) of said agricultural machine, a driving mechanism (23) for driving said upper and lower cutting blades with an alternative linear movement, comprising each upper and cutting blades a set of individual cutting knifes (14-15) separated between each other, said counterblade (31) comprises a "U" shaped fixed counterblade, wherein each arm of said U-shaped counterblade defines an individual counterblade comprising an upper portion and a lower portion (31a-31b), wherein the upper portion is arranged above said upper cutting blade (32) and said lower portion is arranged below said lower cutting blade (33), cutting the plant stems entering the space between said individual counterblades by creating a shearing effect between: a first counterblade and said upper cutting blade; a second counterblade and said upper cutting blade, a second counterblade and said lower cutting blade; a third counterblade and said lower cutting blade, said third counterblade and said upper cutting blade, and said first counterblade and said lower cutting blade.

7. The method of claim 6, comprising the step of running each upper and lower cutting blade (32-33) a space ("D") equal to the space comprised between three fixed individual counterblades (31) with only one half turn of said pulley (23').

8. The method of claim 6, comprising the step of creating with only one half turn of said pulley (23') four different shearing effects.

9. An improved harvester machine wherein the headstock of said machine includes a cutting device (30) comprising an upper cutting blade (32), a lower cutting blade (33), between said upper and lower cutting blades a separating plate (37) is arranged, a counterblade transversely fixed to the chassis of said agricultural machine, a driving mechanism (23) for driving said upper and lower cutting blades (32-33) with an alternative linear movement, comprising each upper and cutting blades a set of individual cutting knifes (14-15) separated between each other, said counterblade (31) comprises a "U" shaped fixed counterblade wherein each arm of said U-shaped counterblade defines an individual counterblade comprising an upper portion and a lower portion, wherein the upper portion is arranged above said upper cutting blade and said lower portion is arranged below said lower cutting blade therefore the shearing effect is created between each upper and lower cutting blades and said fixed counterblade.
